# DEMANDE DE BREVET EUROPEEN

(11) **EP 2 899 415 A1**
(43) Date de publication de la demande: **29.07.2015**
(21) Numéro de dépôt: 15152209.1
(22) Date de dépôt: 22.01.2015
(51) Int. Cl.: F16C 27/06, F16C 25/08

(54) **Ensemble de roulement comprenant une unité de palier de roulement et une pièce mécanique**

(30) Priorité: 22.01.2014 FR 1450538
(71) Demandeur: NTN-SNR Roulements, 74000 Annecy (FR)
(72) Inventeur: Brisson, Sébastien, 74130 Contamine sur Arve (FR); Schmidt, Christof, 74150 Sales (FR)
(74) Mandataire: Derambure Conseil

(57) **Abrégé**

Assemblage roulant (1) comportant une pièce mécanique (2) définissant un alésage (4) muni d'une surface intérieure (5), une unité de roulement (3) comportant une bague extérieure (6), montée dans l'alésage (4) avec une surface extérieure (9) en regard de la surface intérieure (5) et un espace radial roulement/alésage (10) défini entre la surface extérieure (9) et la surface intérieure (5), un organe déformable de compensation (13) du jeu radial, interposé ajusté dans l'espace radial roulement/alésage (10) et apte à se déformer pour compenser un déplacement radial relatif des surfaces intérieure et extérieure.

L'assemblage comporte un élément rigide de butée (21) du jeu radial apte à limiter le déplacement radial relatif des surfaces intérieure et extérieure, de sorte qu'une déformation de l'organe déformable de compensation reste comprise dans une plage de déformation élastique de l'organe déformable de compensation.

## Description

L'invention concerne le domaine des assemblages roulants comprenant une unité de roulement et une pièce mécanique et dans lesquels la pièce mécanique comporte un alésage accueillant la bague extérieure de l'unité de roulement. Dans de tels assemblages, la bague intérieure de l'unité de roulement est usuellement montée sur un arbre, l'unité de roulement permettant ainsi la rotation relative de l'arbre par rapport à la pièce mécanique.

Plus particulièrement, l'invention est relative à un assemblage roulant comportant une pièce mécanique définissant un alésage délimité par une surface intérieure cylindrique, une unité de roulement comportant une bague extérieure, montée sensiblement concentriquement dans l'alésage avec une surface extérieure cylindrique en regard de la surface intérieure de l'alésage et un espace radial roulement/alésage défini entre ladite surface extérieure et ladite surface intérieure, une bague intérieure, adaptée pour être montée sur un arbre, et des corps roulants agencés dans un espace annulaire séparant les bagues intérieure et extérieure, et un organe déformable de compensation du jeu radial, interposé ajusté dans l'espace radial roulement/alésage, de sorte que la bague extérieure de l'unité de roulement est conformée à l'alésage et montée de façon fixe solidaire en rotation sur sa surface intérieure par l'intermédiaire de l'organe déformable de compensation, l'organe déformable de compensation étant apte à se déformer pour compenser un déplacement radial relatif des surfaces intérieure et extérieure.

Dans certaines conditions d'utilisation, la température à laquelle est soumis l'assemblage roulant peut varier de façon importante, par exemple entre -20°C et 200°C, ce qui entraîne des dilatations différentielles considérables entre l'arbre, l'unité de roulement et l'alésage. Ainsi, en particulier, la présence d'un organe de compensation permet de rattraper les variations du jeu radial roulement/alésage lors de ces variations de température, de sorte que la bague extérieure reste montée dans l'alésage de façon fixe en rotation et centrée sur l'axe de l'alésage, l'assemblage roulant présentant une bonne rigidité radiale et les contraintes et frottements induits restant faibles au sein de l'unité de roulement.

Ainsi par exemple, le document DE 10 2005 043 954 décrit un assemblage roulant comportant un anneau de mise en tension, logé entre la bague extérieure et l'alésage, et dont la matière présente un coefficient de dilatation thermique supérieur au coefficient de dilatation thermique de la bague extérieure du roulement, de façon à rattraper un jeu radial apparaissant entre la bague extérieure et l'alésage lors de variation de températures. Le document FR-1-113-802 décrit un coussinet en matière plastique pouvant être utilisé pour recevoir un arbre dans un alésage et comprenant un organe d'appui élastique en forme de ressort ondulé. Le document US 2012-195537 divulgue un assemblage roulant comportant une bague ondulée permettant de compenser la modification du jeu axial entraînée par une dilatation différentielle thermique entre un arbre et une pièce mécanique.

De tels assemblages roulants présentent cependant un certain nombre d'inconvénients. Ainsi, on a pu observer des dysfonctionnements de l'assemblage roulant en cours de fonctionnement, après que des efforts radiaux importants lui ont été imposés.

Il existe donc le besoin de disposer d'assemblages roulants qui ne comportent pas les limites ou inconvénients des réalisations précédemment décrites.

À cet effet, l'assemblage roulant selon l'invention, par ailleurs conforme à la définition générique qu'en donne le préambule ci-dessus, est caractérisée par le fait qu'il comporte en outre un élément rigide de butée du jeu radial apte à limiter le déplacement radial relatif des surfaces intérieure et extérieure, de sorte qu'une déformation de l'organe déformable de compensation, pour compenser un déplacement radial relatif des surfaces intérieure et extérieure, soit inférieure à une déformation maximale permise.

Grâce à cet agencement la plastification de l'organe de compensation lors d'un effort radial important est empêchée, tout comme un déplacement trop important de l'arbre monté dans la bague intérieure par rapport à l'alésage.

Selon une réalisation, l'organe déformable de compensation du jeu radial s'étend sensiblement circonférentiellement, dans l'espace radial roulement/alésage, et présente une pluralité de portions en débord radial déformables reliées entre elles par des portions de liaison.

Selon une réalisation, l'organe déformable de compensation du jeu radial s'étend radialement entre une surface radiale intérieure et une surface radiale extérieure, la surface radiale intérieure comporte des zones intérieures de contact en contact avec la surface extérieure de la bague extérieure, la surface radiale extérieure comporte des zones extérieures de contact en contact avec la surface intérieure de l'alésage, et les zones intérieures de contact et les zones extérieures de contact sont alternées circonférentiellement.

Selon une réalisation, l'organe déformable de compensation du jeu radial s'étend circonférentiellement autour de la bague extérieure entre une première extrémité circonférentielle et une deuxième extrémité circonférentielle espacées l'une de l'autre, de sorte que l'organe déformable de compensation du jeu radial s'étend sur une portion circonférentielle de la surface extérieure de la bague extérieure et est apte à se déformer circonférentiellement par déplacement relatif des extrémités circonférentielles.

Selon une réalisation, l'organe déformable de compensation du jeu radial est une plaque de tôle mise en forme, en particulier une plaque de tôle mise en forme pour présenter une pluralité d'ondulations.

Selon une réalisation, la plaque de tôle mise en forme est une plaque de tôle pleine ne présentant pas d'évidements.

Selon une réalisation, l'élément rigide de butée du jeu radial est un organe disposé dans l'espace radial roulement/alésage, s'étendant sensiblement circonférentiellement autour de la bague extérieure, et comportant une pluralité de parties de butée.

Selon une réalisation, des parties de butée comportent chacune une surface de butée extérieure disposée en regard d'une surface de butée de l'alésage, et une surface de butée intérieure disposée en regard d'une zone de butée de la surface radiale extérieure de l'organe déformable de compensation du jeu radial, et la surface radiale intérieure de l'organe déformable de compensation du jeu radial présente des zones intérieures de contact disposées en regard des zones de butée de la surface radiale extérieure.

Selon une réalisation, un jeu radial effectif alésage/roulement est égal à la somme d'un jeu radial alésage/butée défini entre les surfaces de butée de l'alésage et les surfaces de butée extérieure des parties de butée, d'un jeu radial butée/compensation défini entre les surfaces de butée intérieure des parties de butée et les zones de butée de la surface radiale extérieure de l'organe déformable de compensation du jeu radial, et d'un jeu radial compensation/roulement défini entre les zones intérieures de contact de la surface radiale intérieure de l'organe déformable de compensation du jeu radial et des surfaces de butée de la bague extérieure, et le jeu radial effectif alésage/roulement est inférieur à un jeu radial maximal permis entre l'alésage et l'unité de roulement.

Selon une réalisation, des parties de butée comportent chacune une surface de butée extérieure disposée en regard d'une zone de butée de la surface radiale intérieure de l'organe déformable de compensation du jeu radial, et une surface de butée intérieure disposée en regard d'une surface de butée de la bague extérieure, et la surface radiale extérieure de l'organe déformable de compensation du jeu radial présente des zones extérieures de contact disposées en regard des zones de butée de la surface radiale intérieure.

Selon une réalisation, un jeu radial effectif alésage/roulement est égal à la somme d'un jeu radial alésage/compensation défini entre des surfaces de butée de l'alésage et des zones extérieures de contact de l'organe déformable de compensation du jeu radial, d'un jeu radial compensation/butée défini entre des zones de butée de la surface radiale intérieure de l'organe déformable de compensation du jeu radial et des surfaces de butée extérieure de parties de butée, et d'un jeu radial butée/roulement défini entre des surfaces de butée intérieure de parties de butée et des surfaces de butée de la bague extérieure, et le jeu radial effectif alésage/roulement est inférieur à un jeu radial maximal permis entre l'alésage et l'unité de roulement.

Selon une réalisation, l'élément rigide de butée du jeu radial comporte deux tronçons circonférentiels, s'étendant chacun au moins sur une portion de la circonférence de la bague extérieure, se faisant face selon une direction axiale de l'unité de roulement, et reliés entre eux par une pluralité de parties de butée s'étendant chacune sensiblement selon la direction axiale de l'unité de roulement.

Selon une réalisation, l'élément rigide de butée du jeu radial s'étend circonférentiellement autour de la bague extérieure entre une première et une deuxième extrémité circonférentielles espacées l'une de l'autre, de sorte que l'élément rigide de butée du jeu radial s'étend sur une portion circonférentielle de la surface extérieure de la bague extérieure et est apte à se déformer circonférentiellement par déplacement relatif des extrémités circonférentielles.

Selon une réalisation, l'élément rigide de butée du jeu radial est une plaque de tôle mise en forme, en particulier une plaque de tôle mise en forme pour présenter deux tronçons circonférentiels reliés entre eux par une pluralité de parties de butée.

Selon une réalisation, l'élément rigide de butée du jeu radial est un épaulement cylindrique sortant de la bague extérieure comportant une surface de butée d'épaulement disposée en regard d'une surface de butée de l'alésage, et un espace radial épaulement/alésage défini entre ladite surface de butée d'épaulement et ladite surface de butée de l'alésage présente un jeu radial inférieur à un jeu radial de l'espace radial roulement/alésage.

Selon une réalisation, l'épaulement cylindrique sortant de la bague extérieure est accueilli dans un épaulement complémentaire de l'alésage présentant ladite surface de butée de l'alésage.

Selon une réalisation, l'espace radial épaulement/alésage présente un jeu radial inférieur à un jeu radial maximal permis entre l'alésage et l'unité de roulement.

Selon une réalisation, l'élément rigide de butée du jeu radial est un épaulement cylindrique sortant de l'alésage comportant une surface de butée de l'alésage disposée en regard d'une surface de butée de la bague extérieure, et un espace radial épaulement/roulement défini entre ladite surface de butée de l'alésage et ladite surface de butée de la bague extérieure présente un jeu radial inférieur à un jeu radial maximal de l'espace radial roulement/alésage.

Selon une réalisation, l'épaulement cylindrique sortant de l'alésage est accueilli dans un épaulement complémentaire de la bague extérieure présentant ladite surface de butée de la bague extérieure.

Selon une réalisation, l'espace radial épaulement/ roulement présente un jeu radial inférieur à un jeu radial maximal permis entre l'alésage et l'unité de roulement.

Selon une réalisation, la bague extérieure de l'unité de roulement s'étend axialement entre une première et une deuxième extrémité axiale, et l'épaulement cylindrique est disposé à l'endroit de l'une desdites extrémités axiales.

Selon une réalisation, l'élément rigide de butée du jeu radial est une bague cylindrique montée sur la bague extérieure et comportant une surface de butée de bague disposée en regard d'une surface de butée de l'alésage, et un espace radial bague/alésage défini entre ladite surface de butée de bague et ladite surface de butée de l'alésage présente un jeu radial inférieur à un jeu radial maximal de l'espace radial roulement/alésage.

Selon une réalisation, l'espace radial bague/alésage présente un jeu radial inférieur à un jeu radial maximal permis entre l'alésage et l'unité de roulement.

Selon une réalisation, l'élément rigide de butée du jeu radial est une bague cylindrique antifretting.

Selon une réalisation, la bague extérieure de l'unité de roulement s'étend axialement entre une première et une deuxième extrémité axiale et la bague cylindrique est disposée à l'endroit de l'une desdites extrémités axiales.

Selon une réalisation, l'élément rigide de butée du jeu radial comprend deux bagues cylindriques disposées respectivement à l'endroit de la première et de la deuxième extrémité axiale de la bague extérieure.

Selon une réalisation, l'élément rigide de butée du jeu radial comporte une surface extrémale radiale de rayon constant s'étendant circonférentiellement autour d'une majorité au moins de la circonférence de la bague extérieure, de préférence autour de la quasi-totalité de la circonférence de la bague extérieure.

Selon une réalisation, surface extrémale radiale de rayon constant entoure circonférentiellement la totalité de la bague extérieure.

Selon une réalisation, l'élément rigide de butée et/ou l'organe déformable de compensation sont agencés de sorte à ce que l'unité de roulement présente un jeu axial supérieur à un jeu axial prédéfini.

Selon une réalisation, l'élément rigide de butée et/ou l'organe déformable de compensation sont disposés axialement entre des extrémités axiales de la bague extérieure de l'unité de roulement.

Selon une réalisation, l'élément rigide de butée et/ou l'organe déformable de compensation sont disposés axialement entre les extrémités axiales de la bague intérieure de l'unité de roulement.

D'autres caractéristiques et avantages de l'invention apparaîtront au cours de la description suivante de plusieurs de ses formes de réalisation, données à titre d'exemple non limitatif, en regard des dessins joints.

Sur les dessins :
- La figure 1 est une vue de détail, en coupe radiale, d'un assemblage roulant comportant une pièce mécanique, un arbre et une unité de roulement selon l'invention ;
- La figure 2 est une coupe axiale de l'assemblage roulant de la figure 1 ;
- La figure 3 est une vue de détail en perspective de l'assemblage roulant de la figure 1, sans l'arbre, les corps roulants et la bague intérieure de l'unité de roulement, la pièce mécanique étant tronquée pour dévoiler l'organe déformable de compensation et l'élément rigide de butée ;
- Les figures 4A et 4B sont des vues de détail, en coupe radiale, de l'assemblage roulant de la figure 1 selon une première variante d'un premier mode de réalisation de l'invention, respectivement dans un état de repos ou nominal et dans un état dans lequel la surface intérieure de l'alésage présente un déplacement radial relatif par rapport à la surface extérieure de la bague extérieure dans l'état de repos ;
- La figure 5 est une vue de détail en coupe radiale, de l'assemblage roulant de la figure 1 selon une deuxième variante du premier mode de réalisation de l'invention;
- La figure 6 est une vue de détail en coupe radiale, de l'assemblage roulant de la figure 1 selon une troisième variante du premier mode de réalisation de l'invention;
- Les figures 7, 7A et 8 sont des vues de détail, en coupe radiale, de l'assemblage roulant de la figure 1 selon trois variantes d'un deuxième mode de réalisation de l'invention dans lequel la bague extérieure de l'unité de roulement présente un épaulement cylindrique sortant ;
- Les figures 9 et 10 sont des vues de détail, en coupe radiale, de l'assemblage roulant de la figure 1 selon deux autres variantes du deuxième mode de réalisation de l'invention dans lequel l'alésage de la pièce mécanique présente un épaulement cylindrique sortant;
- La figure 11 est une vue de détail, en coupe radiale, de l'assemblage roulant de la figure 1 selon un troisième mode de réalisation de l'invention dans lequel une bague cylindrique est montée sur la bague extérieure de l'unité de roulement.

Sur les différentes figures, les mêmes références désignent des éléments identiques ou similaires.

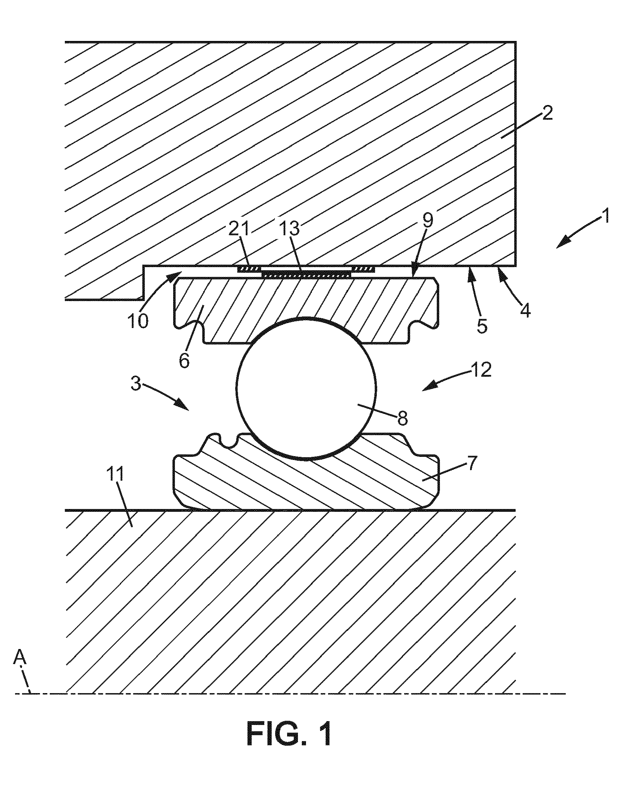

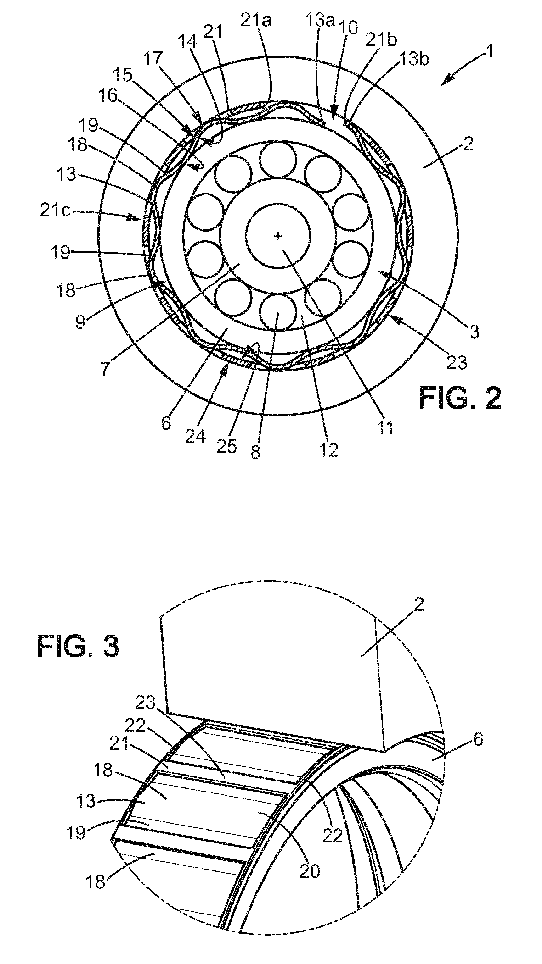

Les figures 1 et 2 illustrent un assemblage roulant 1 selon un premier mode de réalisation de l'invention.

L'assemblage roulant 1 comporte une pièce mécanique 2 et une unité de roulement 3. La pièce mécanique 2 définit en particulier un alésage 4 délimité par une surface intérieure 5 cylindrique.

L'assemblage roulant 1 ainsi que l'unité de roulement 3 sont généralement symétrique de révolution autour d'une direction axiale A et par convention, il convient de mentionner, d'une part, que la direction axiale A fera référence dans la suite du texte à toute direction coïncidant avec l'axe géométrique de révolution A de l'assemblage roulant 1 et, d'autre part, que la direction radiale fera référence à toute direction issue de l'axe géométrique de révolution A et appartenant à un plan perpendiculaire à cet axe géométrique de révolution A. Enfin, par « circonférentielle » et « circonférentiel », on entendra des directions ortho-radiales à la direction axiale A au point considéré et/ou des trajectoires sensiblement circulaires (ou parfaitement circulaires) autour de la direction axiale A et appartenant à un plan perpendiculaire à cet axe géométrique de révolution A.

L'unité de roulement 3 comprend une bague extérieure 6, une bague intérieure 7 et des corps roulants 8. La bague extérieure 6 est montée sensiblement concentriquement dans l'alésage 4 avec une surface extérieure 9 cylindrique en regard de la surface intérieure 5 de l'alésage 4 et un espace radial roulement/alésage 10 défini entre ladite surface extérieure 9 et ladite surface intérieure 5. La bague intérieure 7 est adaptée pour être montée sur un arbre 11. Enfin, les corps roulants 8 sont agencés dans un espace annulaire 12 séparant la bague intérieure 7 et la bague extérieure 6. L'unité de roulement 3 permet ainsi la rotation relative de l'arbre 11 par rapport à la pièce mécanique 2.

Les corps roulants 8 peuvent être de tous types, par exemple des billes, comme illustré sur les figures 1 et 2, ou encore des rouleaux coniques ou cylindriques, tonneaux ou aiguilles.

Dans certaines conditions d'utilisation, la température à laquelle est soumis l'assemblage roulant peut varier de façon importante, par exemple entre -20°C et 200°C, ce qui entraîne des dilatations différentielles considérables entre l'arbre, l'unité de roulement et l'alésage.

Comme illustré sur les figures 1 et 2, l'assemblage roulant 1 comporte ainsi un organe déformable de compensation 13 du jeu radial. Cet organe déformable de compensation 13 est interposé ajusté dans l'espace radial roulement/alésage 10. Ainsi, la bague extérieure 6 de l'unité de roulement 3 est conformée à l'alésage 4 et montée sur la surface intérieure 5 de l'alésage 4 de façon fixe et solidaire en rotation de la pièce mécanique 2, par l'intermédiaire de l'organe déformable de compensation 13.

L'organe déformable de compensation 13 est apte à se déformer pour compenser un déplacement radial relatif de la surface intérieure 5 et de la surface extérieure 9. En particulier, l'organe déformable de compensation 13 est apte, dans une gamme de fonctionnement élastique dudit organe, à se déformer dans une plage de déformation élastique.

On entend ici respectivement par « gamme de fonctionnement élastique » et « plage de déformation élastique », un fonctionnement réversible et une plage de déformation réversible, c'est-à-dire dans lesquelles l'organe déformable de compensation 13 est déformé en étant apte à revenir à son état initial, non-déformé, lorsque les efforts liés au déplacement radial relatif de la surface intérieure 5 et de la surface extérieure 9 sont supprimés.

Plus précisément, comme illustré sur la figure 2, l'organe déformable de compensation 13 du jeu radial s'étend sensiblement circonférentiellement, dans l'espace radial roulement/alésage 10.

L'organe déformable de compensation 13 du jeu radial s'étend en particulier circonférentiellement autour de la bague extérieure 6 entre une première extrémité circonférentielle 13a et une deuxième extrémité circonférentielle 13b. La première extrémité circonférentielle 13a et la deuxième extrémité circonférentielle 13b peuvent par exemple être espacées l'une de l'autre. De cette façon, l'organe déformable de compensation 13 du jeu radial s'étend sur une portion circonférentielle de la surface extérieure 9 de la bague extérieure 6. On entend par « une portion circonférentielle de la surface extérieure 9 » que l'organe déformable de compensation 13 du jeu radial ne s'étend pas sur l'ensemble de la circonférence de la surface extérieure 9 de la bague extérieure 6. De cette façon, l'organe déformable de compensation 13 est apte à se déformer circonférentiellement par déplacement relatif des extrémités circonférentielles 13a, 13b.

Comme illustré sur la figure 2, l'organe déformable de compensation 13 du jeu radial s'étend radialement entre une surface radiale intérieure 14 et une surface radiale extérieure 15. La surface radiale intérieure 14 comporte des zones intérieures de contact 16 en contact avec la surface extérieure 9 de la bague extérieure 6. La surface radiale extérieure 15 comporte des zones extérieures de contact 17 en contact avec la surface intérieure 5 de l'alésage 4. Dans l'exemple des figures 1 et 2, les zones intérieures de contact 16 et les zones extérieures de contact 17 sont alternées circonférentiellement.

Ainsi comme cela est visible plus particulièrement sur la figure 3 qui représente un détail de l'assemblage roulant 1, l'organe déformable de compensation 13 présente une pluralité de portions en débord radial 18 déformables reliées entre elles par des portions de liaison 19. Les portions en débord radial 18 portent chacune, et de façon alternée circonférentiellement, une zone intérieure de contact ou une zone extérieure de contact. L'organe déformable de compensation 13 présente ainsi une pluralité d'ondulations 20.

Les portions de liaison 19 peuvent être pleines ou présenter des évidements permettant en particulier d'alléger la structure et de contrôler la résistance à la déformation de l'organe déformable de compensation 13.

Ainsi, l'organe déformable de compensation 13 du jeu radial peut être constitué d'un seul tenant par mise forme d'une plaque de tôle mise en forme. L'épaisseur de la plaque de tôle peut par exemple être comprise entre 2 et 5 mm.

Dans l'exemple des figures 1, 2 et 3, la plaque de tôle mise en forme est une plaque de tôle pleine emboutie pour présenter des ondulations 20. Dans une variante de réalisation, la plaque de tôle mise en forme pourra être perforée et présenter des évidements permettant d'alléger la structure.

L'assemblage roulant 1 comporte en outre un élément rigide de butée 21 du jeu radial dont un premier mode de réalisation est représenté en particulier sur les figures 1, 2 et 3. L'élément rigide de butée 21 du jeu radial est apte à limiter le déplacement radial relatif de la surface intérieure 5 et de la surface extérieure 9.

Plus précisément, l'élément rigide de butée 21 du jeu radial est apte à limiter le déplacement radial relatif de la surface intérieure 5 et de la surface extérieure 9 de sorte qu'une déformation de l'organe déformable de compensation 13 pour compenser un déplacement radial relatif des surfaces intérieure et extérieure, soit comprise dans la plage de déformation élastique.

De manière générale, l'élément rigide de butée 21 du jeu radial comporte une surface extrémale radiale 21c de rayon constant s'étendant circonférentiellement autour d'une majorité au moins de la circonférence de la bague extérieure 6, de préférence autour de la quasi-totalité de la circonférence de la bague extérieure 6, le cas échéant entourant circonférentiellement la totalité de la bague extérieure 6.

Par « rayon constant », on entend une distance à la direction axiale A de l'assemblage roulant 1 et/ou de l'unité de roulement 3.

Dans le premier mode de réalisation de l'invention, illustré figures 1 à 3, l'élément rigide de butée 21 du jeu radial est un organe disposé dans l'espace radial roulement/alésage 10.

L'élément rigide de butée 21 du jeu radial s'étend sensiblement circonférentiellement autour de la bague extérieure 6. De façon similaire à ce qui a été décrit ci-avant pour l'organe déformable de compensation 13 du jeu radial, l'élément rigide de butée 21 du jeu radial peut s'étendre circonférentiellement autour de la bague extérieure 6 entre une première extrémité circonférentielle 21a et une deuxième extrémité circonférentielle 21b. La première extrémité circonférentielle 21a et la deuxième extrémité circonférentielle 21b peuvent en particulier être espacées l'une de l'autre. De cette façon, l'élément rigide de butée 21 du jeu radial s'étend sur une portion circonférentielle de la surface extérieure 9 de la bague extérieure 6 et ne s'étend pas sur l'ensemble de la circonférence de la surface extérieure 9 de la bague extérieure 6. Comme pour l'organe déformable de compensation 13 du jeu radial, cet arrangement permet de laisser l'élément rigide de butée 21 du jeu radial se déformer circonférentiellement par déplacement relatif des extrémités circonférentielles 21 a, 21 b lors des déformations relatives de l'alésage 4 et de la bague extérieure 6.

L'élément rigide de butée 21 du jeu radial peut plus particulièrement comporter deux tronçons circonférentiels 22, s'étendant chacun au moins sur une portion de la circonférence de la bague extérieure 6 et se faisant face selon une direction axiale A de l'unité de roulement 3.

Dans ce mode de réalisation, la surface extrémale radiale 21c de rayon constant s'étendant circonférentiellement autour d'une majorité au moins de la circonférence de la bague extérieure 6 peut notamment être une surface extrémale radiale de l'un et/ou l'autre desdits tronçons circonférentiels 22.

L'élément rigide de butée 21 du jeu radial peut en outre comporter une pluralité de parties de butée 23. Les parties de butée 23 peuvent s'étendre chacune sensiblement selon la direction axiale A de l'unité de roulement 3. Les tronçons circonférentiels 22 peuvent ainsi être reliés entre eux par les parties de butée 23.

L'élément rigide de butée 21 du jeu radial peut par exemple être une plaque de tôle mise en forme, en particulier une plaque de tôle mise en forme pour présenter des tronçons circonférentiels 22 reliés entre eux par une pluralité de parties de butée 23.

Comme illustré par exemple sur la figure 2, les parties de butée 23 comportent chacune une surface de butée extérieure 24 et une surface de butée intérieure 25, opposée selon une direction radiale.

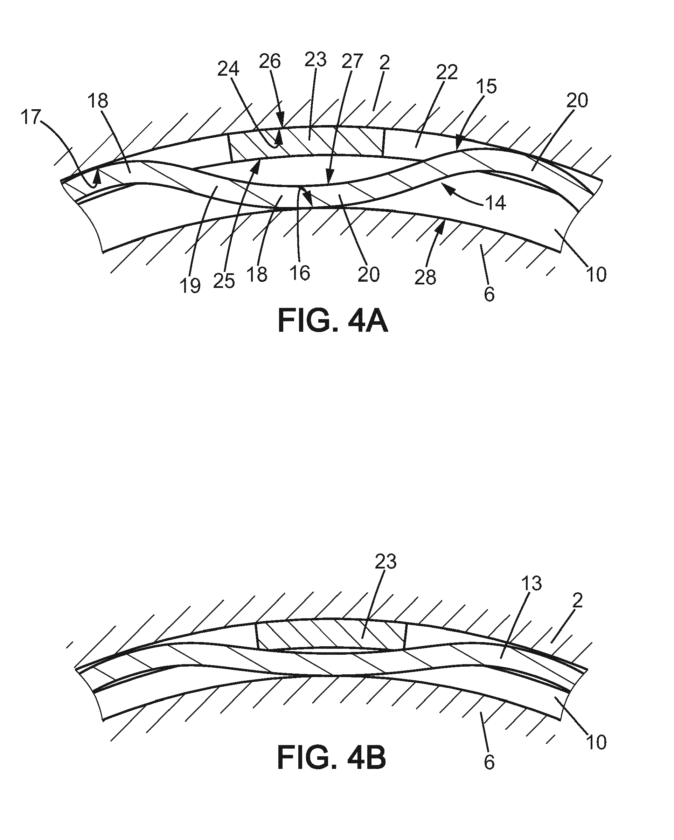

On se réfère à présent plus précisément aux figures 4A et 4B qui illustrent un détail de l'assemblage roulant 1 de la figure 2 selon une première variante du premier mode de réalisation de l'invention, respectivement dans un état de repos ou nominal et dans un état dans lequel la surface intérieure 5 de l'alésage 4 présente un déplacement radial relatif par rapport à la surface extérieure 9 de la bague extérieure 6 dans l'état de repos.

Dans cette première variante, la surface de butée extérieure 24 est disposée en regard d'une surface de butée de l'alésage 26. La surface de butée intérieure 25 est, quant à elle, disposée en regard d'une zone de butée 27 de la surface radiale extérieure 15 de l'organe déformable de compensation 13 du jeu radial. Enfin, la surface radiale intérieure 14 de l'organe déformable de compensation 13 du jeu radial présente des zones intérieures de contact 16 disposées en regard des zones de butée 27 de la surface radiale extérieure 15.

Comme illustré sur la figure 4A, on peut ainsi définir un jeu radial effectif alésage/roulement qui est égal à la somme d'un jeu radial alésage/butée, d'un jeu radial butée/compensation et d'un jeu radial compensation/roulement qui vont maintenant être décrits plus avant.

Le jeu radial alésage/butée est défini entre les surfaces de butée de l'alésage 4 et les surfaces de butée extérieure 24 des parties de butée 23.

Le jeu radial butée/compensation est défini entre les surfaces de butée intérieure 25 des parties de butée 23 et des zones de butée 27 de la surface radiale extérieure 15 de l'organe déformable de compensation 13 du jeu radial.

Enfin, le jeu radial compensation/roulement est défini entre les zones intérieures de contact 16 de la surface radiale intérieure 14 de l'organe déformable de compensation 13 du jeu radial et des surfaces de butée de la bague extérieure 28. Les surfaces de butée de la bague extérieure 28 sont en particulier disposées sur la surface radiale extérieure 9 de la bague extérieure 6.

Dans le mode de réalisation de la figure 4A, le jeu radial effectif alésage/roulement est inférieur à un jeu radial maximal permis entre l'alésage 4 et l'unité de roulement 3.

Le jeu radial maximal permis entre l'alésage 4 et l'unité de roulement 3 est défini de sorte à limiter le déplacement radial maximal entre l'alésage 4 et l'unité de roulement 3 pour maintenir l'organe déformable de compensation 13 dans sa gamme de fonctionnement élastique. Ceci est illustré sur la figure 4B dans laquelle l'organe de butée est en butée contre l'organe déformable de compensation 13 et contre l'alésage 4. L'organe déformable de compensation 13 n'est alors pas écrasé entre l'alésage 4 et la bague extérieure 6 du roulement et la plastification de l'organe de compensation lors d'un effort radial important est empêchée. L'invention permet en outre de limiter un déplacement trop important de l'arbre 11 monté dans la bague intérieure 7 par rapport à l'alésage 4.

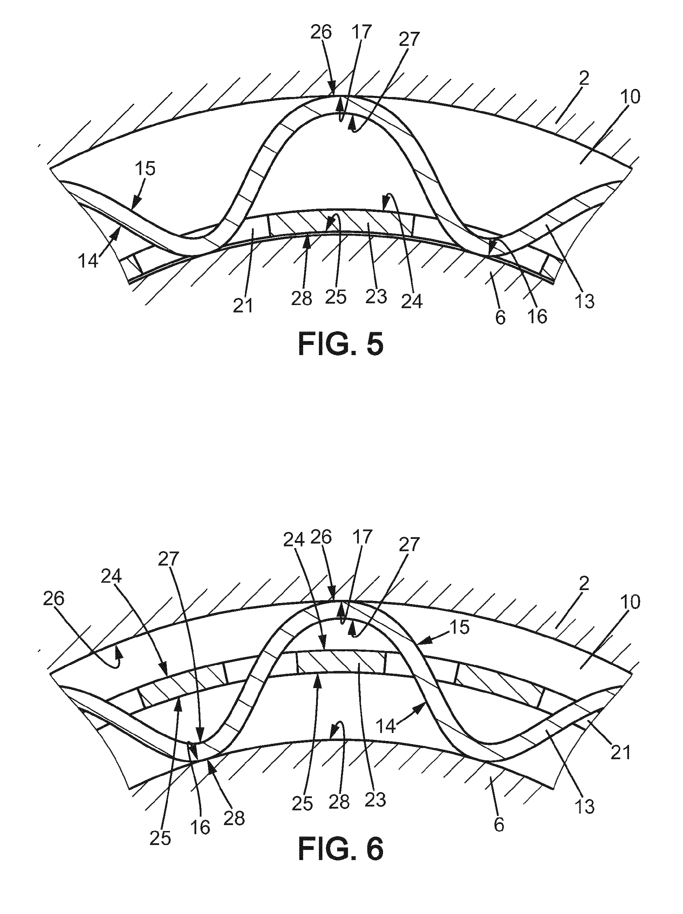

Une deuxième variante de ce premier mode de réalisation est illustrée figure 5. Dans cette deuxième variante, la surface de butée extérieure 24 de l'élément rigide de butée 21 est disposée en regard d'une zone de butée 27 de la surface radiale intérieure 14 de l'organe déformable de compensation 13 du jeu radial, tandis que la surface de butée intérieure 25 est disposée en regard d'une surface de butée 28 de la bague extérieure 6. Enfin, la surface radiale extérieure 15 de l'organe déformable de compensation 13 du jeu radial présente des zones extérieures de contact 17 disposées en regard des zones de butée 27 de la surface radiale intérieure 14.

On peut à nouveau définir un jeu radial effectif alésage/roulement qui, dans cette première variante, est égal à la somme d'un jeu radial alésage/compensation, d'un jeu radial compensation/butée et d'un jeu radial butée/roulement.

Le jeu radial alésage/compensation est défini entre les surfaces de butée de l'alésage 26 et les zones extérieures de contact 17 de l'organe déformable de compensation 13 du jeu radial. Le jeu radial compensation/butée est défini entre les zones de butée 27 de la surface radiale intérieure 14 de l'organe déformable de compensation 13 du jeu radial et les surfaces de butée extérieure 24 des parties de butée 23. Enfin, le jeu radial butée/roulement est défini entre les surfaces de butée intérieure 25 des parties de butée 23 et les surfaces de butée 28 de la bague extérieure 6.

Dans cette deuxième variante également, le jeu radial effectif alésage/roulement est également inférieur à un jeu radial maximal permis entre l'alésage 4 et l'unité de roulement 3.

De cette façon, comme détaillé ci-avant, il est possible de limiter le déplacement radial maximal entre l'alésage 4 et l'unité de roulement 3, lorsque l'organe de butée entre en butée contre l'organe déformable de compensation 13 et contre la bague extérieure 6. L'organe déformable de compensation 13 n'est ainsi pas écrasé entre l'alésage 4 et la bague extérieure 6 du roulement et la plastification de l'organe de compensation lors d'un effort radial important est empêchée. L'invention permet en outre de limiter un déplacement trop important de l'arbre 11 monté dans la bague intérieure 7 par rapport à l'alésage 4.

La figure 6 illustre une troisième variante du premier mode de réalisation de l'invention, qui est une combinaison des première et deuxième variantes des figures 4A et 5. Plus précisément, dans ce mode de réalisation, les parties de butée 23 sont disposées en regard de chacune des zones de butée 27 de la surface radiale extérieure 15 et de la surface radiale intérieure 14 de l'organe déformable de compensation 13 du jeu radial. Les parties de butée 23 disposées en regard des zones de butée 27 de la surface radiale extérieure 15 de l'organe déformable de compensation 13 du jeu radial présentent des caractéristiques similaires à celles décrites concernant la première variante de ce premier mode de réalisation illustrée figure 4A et 4B. En particulier, on peut définir pour ces parties de butée 23 un jeu radial alésage/butée, un jeu radial butée/compensation et un jeu radial compensation/roulement. Les parties de butée 23 disposées en regard des zones de butée 27 de la surface radiale intérieure 14 de l'organe déformable de compensation 13 du jeu radial présentent des caractéristiques similaires à celles décrites concernant la deuxième variante de ce premier mode de réalisation, illustrée figure 5. En particulier, on peut définir pour ces parties de butée 23 un jeu radial alésage/compensation, un jeu radial compensation/butée et un jeu radial buté/roulement. On ne détaillera ainsi pas plus cette troisième variante du premier mode de réalisation de l'invention, qui est obtenu en combinant les première et deuxième variantes détaillées ci-avant.

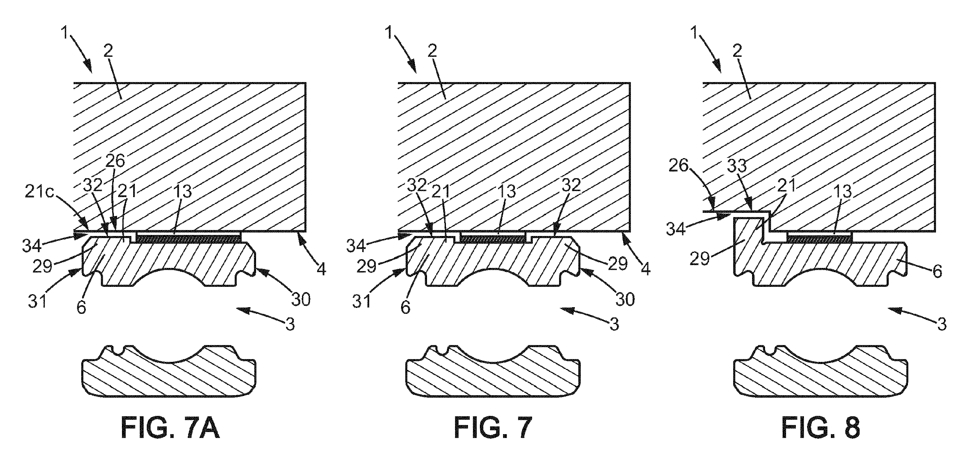

Les figures 7 et 7A illustrent deux variantes d'un deuxième mode de réalisation de l'invention dans lequel l'élément rigide de butée 21 du jeu radial est un épaulement cylindrique 29 de la bague extérieure 6 ou deux épaulements cylindriques 29.

La bague extérieure 6 de l'unité de roulement 3 peut en particulier s'étendre axialement entre une première extrémité axiale 30 et une deuxième extrémité axiale 31. L'épaulement cylindrique 29 peut alors être disposé à l'endroit de l'une desdites extrémités axiales 30, 31 comme sur la figure 7A ou à l'endroit des deux extrémités axiales 30, 31 comme sur la figure 7.

Dans l'exemple des figures 7 et 7A, cet épaulement cylindrique 29 est un épaulement cylindrique sortant.

L'épaulement cylindrique 29 sortant comporte une surface de butée d'épaulement 32 disposée en regard d'une surface de butée de l'alésage 26.

Dans ce deuxième mode de réalisation, la surface extrémale radiale 21c de rayon constant s'étendant circonférentiellement autour d'une majorité au moins de la circonférence de la bague extérieure 6 peut notamment être la surface de butée d'épaulement 32 du ou des épaulements cylindrique 29. La surface extrémale radiale 21c de rayon constant s'étendant circonférentiellement autour d'une majorité au moins de la circonférence de la bague extérieure 6 peut également comporter la surface de butée de l'alésage 26.

Avantageusement, dans ce mode de réalisation, la surface extrémale radiale 21c de rayon constant s'étend alors circonférentiellement autour de la totalité de la circonférence de la bague extérieure 6.

Dans une autre variante illustrée sur la figure 8, l'épaulement cylindrique 29 sortant de la bague extérieure 6 est en particulier accueilli dans un épaulement complémentaire 33 rentrant de l'alésage 4. L'épaulement complémentaire 33 de l'alésage 4 présente alors la surface de butée de l'alésage 26.

La surface de butée d'épaulement 32 et la surface de butée de l'alésage 26 sont espacées l'une de l'autre. Ainsi, un espace radial épaulement/alésage 34 est défini entre la surface de butée d'épaulement 32 et la surface de butée de l'alésage 26. Cet espace radial épaulement/alésage 34 présente en particulier un jeu radial inférieur à un jeu radial de l'espace radial roulement/alésage 10.

L'espace radial épaulement/alésage 34 peut ainsi présenter un jeu radial inférieur à un jeu radial maximal permis entre l'alésage 4 et l'unité de roulement 3.

De cette façon à nouveau, il est possible de limiter le déplacement radial maximal entre l'alésage 4 et l'unité de roulement 3. Ainsi, la plastification de l'organe de compensation lors d'un effort radial important est empêchée, tout comme un déplacement trop important de l'arbre 11 monté dans la bague intérieure 7 par rapport à l'alésage 4.

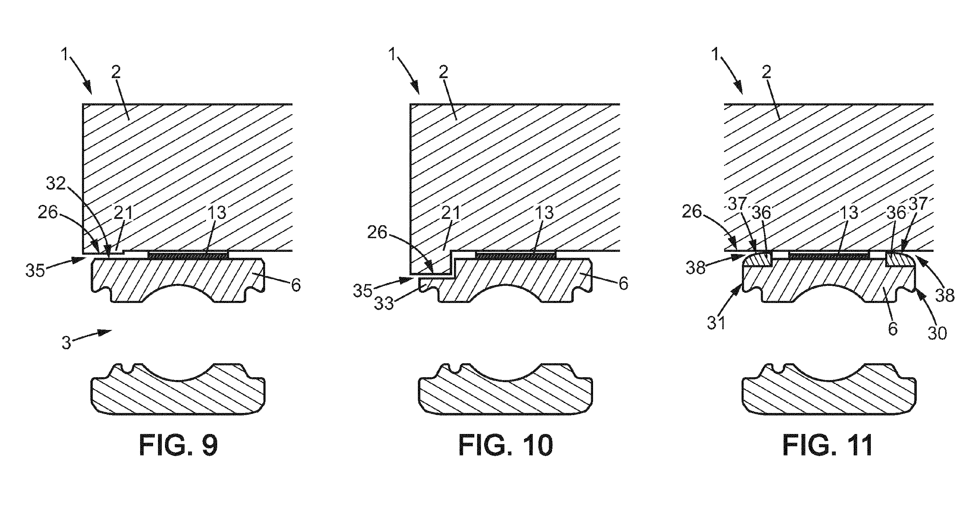

Dans une autre variante de ce deuxième mode de réalisation, représentée figure 9, l'épaulement cylindrique 29 est ici un épaulement cylindrique sortant de l'alésage.

Cet épaulement cylindrique 29 sortant comporte une surface de butée d'épaulement 32 disposée en regard d'une surface de butée de la bague extérieure 6. Comme illustré sur la figure 10, l'épaulement cylindrique 29 sortant de l'alésage 4 peut à nouveau être accueilli dans un épaulement complémentaire 33 rentrant, pratiqué cette fois dans la bague extérieure 6, et présentant ladite surface de butée 28 de la bague extérieure 6.

De façon similaire à la première variante de deuxième mode de réalisation détaillée ci-avant en relation avec les figures 7 et 8, la surface de butée de la bague extérieure 28 et la surface de butée d'épaulement 32 sont espacées l'une de l'autre, de sorte qu'un espace radial épaulement/roulement 35 est défini entre la surface de butée 28 de la bague extérieure 6 et la surface de butée d'épaulement 32. L'espace radial épaulement/roulement 35 présente en particulier un jeu radial inférieur à un jeu radial de l'espace radial roulement/alésage 10. De façon similaire à ce qui a été détaillé ci-avant pour les figures 7 et 8, l'espace radial épaulement/roulement 35 peut présenter un jeu radial inférieur à un jeu radial maximal permis entre l'alésage 4 et l'unité de roulement 3. Il est ainsi possible de limiter le déplacement radial maximal entre l'alésage 4 et l'unité de roulement 3 et donc de prévenir un déplacement trop important de l'arbre 11 monté dans la bague intérieure 7 par rapport à l'alésage 4 ainsi que la plastification de l'organe de compensation 13 lors d'un effort radial important.

Enfin, la figure 11 illustre un troisième mode de réalisation de l'invention, dans lequel l'élément rigide de butée 21 du jeu radial est une bague cylindrique 36 montée sur la bague extérieure 6.

Une telle bague cylindrique 36 montée sur la bague extérieure 6 peut en particulier être une bague cylindrique antifretting.

La bague cylindrique 36 peut être disposée à l'endroit de l'une des extrémités axiales 30, 31 de la bague extérieure 6 de l'unité de roulement 3. En particulier, deux bagues cylindriques 36 peuvent être disposées respectivement à l'endroit de chacune des extrémités axiales 30, 31 de la bague extérieure 6. Ainsi dans l'exemple de réalisation de la figure 11, l'élément rigide de butée 21 du jeu radial comprend deux bagues cylindriques disposées respectivement à l'endroit de la première extrémité axiale 30 et de la deuxième extrémité axiale 31 de la bague extérieure 6.

Plus précisément, la bague cylindrique 36 peut présenter une surface de butée de bague 37 disposée en regard d'une surface de butée de l'alésage 26. On peut ainsi définir un espace radial bague/alésage 38 entre la surface de butée de bague 37 et la surface de butée de l'alésage 26. L'espace radial bague/alésage 38 peut présenter un jeu radial inférieur à un jeu radial de l'espace radial roulement/alésage 10. L'espace radial bague/alésage 38 peut en particulier présenter un jeu radial inférieur à un jeu radial maximal permis entre l'alésage 4 et l'unité de roulement 3.

Dans ce troisième mode de réalisation, la surface extrémale radiale 21c de rayon constant s'étendant circonférentiellement autour d'une majorité au moins de la circonférence de la bague extérieure 6 peut notamment être la surface de butée de bague 37 de la ou des bague(s) cylindrique(s) 36. La surface extrémale radiale 21c de rayon constant s'étendant circonférentiellement autour d'une majorité au moins de la circonférence de la bague extérieure 6 peut également comporter la surface de butée de l'alésage 26.

Avantageusement, dans ce troisième mode de réalisation également, la surface extrémale radiale 21c de rayon constant s'étend alors circonférentiellement autour de la totalité de la circonférence de la bague extérieure 6.

De cette façon, comme pour les autres modes de réalisation détaillés ci-avant, il est possible de limiter le déplacement radial maximal entre l'alésage 4 et l'unité de roulement 3. Ainsi, la plastification de l'organe de compensation lors d'un effort radial important est empêchée, tout comme un déplacement trop important de l'arbre 11 monté dans la bague intérieure 7 par rapport à l'alésage 4.

Par ailleurs, dans les modes de réalisation décrits ci-avant, l'élément rigide de butée 21 et/ou l'organe déformable de compensation 13 peuvent être agencés de sorte à ce que l'unité de roulement 3 présente un jeu axial supérieur à un jeu axial prédéfini.

Ainsi en particulier, l'élément rigide de butée 21 et/ou l'organe déformable de compensation 13 peuvent être par exemple disposés axialement entre les extrémités axiales 30, 31 de la bague extérieure 6 de l'unité de roulement 3. L'élément rigide de butée 21 et/ou l'organe déformable de compensation 13 peuvent également être disposés axialement entre les extrémités axiales de la bague intérieure 7 de l'unité de roulement 3. De cette façon, la bague extérieure 6 et/ou la bague intérieure 7 de l'unité de roulement peuvent être aptes à se déplacer axialement, notamment sur la distance axiale du jeu axial prédéfini, le cas échéant l'une par rapport à l'autre.

Avantageusement, ledit jeu axial prédéfini peut être suffisamment important pour permettre une déformation axiale des composants de l'unité de roulement 3, notamment lors d'efforts ou dilatation subits par l'unité de roulement 3.

## Revendications

1. Assemblage roulant (1) comportant :
- une pièce mécanique (2) définissant un alésage (4) délimité par une surface intérieure (5) cylindrique,
- une unité de roulement (3) comportant :
• une bague extérieure (6), montée sensiblement concentriquement dans l'alésage (4) avec une surface extérieure (9) cylindrique en regard de la surface intérieure (5) de l'alésage (4) et un espace radial roulement/alésage (10) défini entre ladite surface extérieure (9) et ladite surface intérieure (5),
• une bague intérieure (7), adaptée pour être montée sur un arbre (11), et
• des corps roulants (8) agencés dans un espace annulaire (12) séparant la bague intérieure (7) et la bague extérieure (6),
- un organe déformable de compensation (13) du jeu radial, interposé ajusté dans l'espace radial roulement/alésage (10), de sorte que la bague extérieure (6) de l'unité de roulement (3) est conformée à l'alésage (4) et montée sur la surface intérieure (5) de l'alésage (4) de façon fixe et solidaire en rotation de la pièce mécanique (2), par l'intermédiaire de l'organe déformable de compensation (13),
l'organe déformable de compensation (13) étant apte à se déformer pour compenser un déplacement radial relatif de la surface intérieure (5) et de la surface extérieure (9),
**caractérisé en ce que** l'organe déformable de compensation (13) est apte, dans une gamme de fonctionnement élastique dudit organe, à se déformer dans une plage de déformation élastique,
**et en ce que** l'assemblage comporte en outre un élément rigide de butée (21) du jeu radial apte à limiter le déplacement radial relatif de la surface intérieure (5) et de la surface extérieure (9) de sorte qu'une déformation de l'organe déformable de compensation (13) pour compenser un déplacement radial relatif des surfaces intérieure et extérieure, soit comprise dans la plage de déformation élastique.

2. Assemblage roulant (1) selon la revendication 1, dans lequel l'organe déformable de compensation (13) du jeu radial s'étend sensiblement circonférentiellement, dans l'espace radial roulement/alésage (10), et présente une pluralité de portions en débord radial (18) déformables reliées entre elles par des portions de liaison (19).

3. Assemblage roulant (1) selon l'une des revendications 1 et 2, dans lequel
• l'organe déformable de compensation (13) du jeu radial s'étend radialement entre une surface radiale intérieure (14) et une surface radiale extérieure (15),
• la surface radiale intérieure (14) comporte des zones intérieures de contact (16) en contact avec la surface extérieure (9) de la bague extérieure (6),
• la surface radiale extérieure (15) comporte des zones extérieures de contact (17) en contact avec la surface intérieure (5) de l'alésage (4), et
• les zones intérieures de contact (16) et les zones extérieures de contact (17) sont alternées circonférentiellement.

4. Assemblage roulant (1) selon l'une des revendications 1 à 3, dans lequel l'organe déformable de compensation (13) du jeu radial s'étend circonférentiellement autour de la bague extérieure (6) entre une première extrémité circonférentielle (13a) et une deuxième extrémité circonférentielle (13b) espacées l'une de l'autre, de sorte que l'organe déformable de compensation (13) du jeu radial s'étend sur une portion circonférentielle de la surface extérieure (9) de la bague extérieure (6) et est apte à se déformer circonférentiellement par déplacement relatif des extrémités circonférentielles (13a, 13b).

5. Assemblage roulant (1) selon l'une des revendications 1 à 4, dans lequel l'élément rigide de butée (21) du jeu radial est un organe disposé dans l'espace radial roulement/alésage (10), s'étendant sensiblement circonférentiellement autour de la bague extérieure (6), et comportant une pluralité de parties de butée (23).

6. Assemblage roulant (1) selon la revendication 5, dans lequel des parties de butée (23) comportent chacune
• une surface de butée extérieure (24) disposée en regard d'une surface de butée de l'alésage (26), et
• une surface de butée intérieure (25) disposée en regard d'une zone de butée (27) de la surface radiale extérieure (15) de l'organe déformable de compensation (13) du jeu radial,
dans lequel la surface radiale intérieure (14) de l'organe déformable de compensation (13) du jeu radial présente des zones intérieures de contact (16) disposées en regard des zones de butée (27) de la surface radiale extérieure (15),
et dans lequel un jeu radial effectif alésage/roulement est égal à la somme
• d'un jeu radial alésage/butée défini entre les surfaces de butée de l'alésage (26) et les surfaces de butée extérieure (24) des parties de butée,
• d'un jeu radial butée/compensation défini entre les surfaces de butée intérieure (25) des parties de butée et les zones de butée (27) de la surface radiale extérieure (15) de l'organe déformable de compensation (13) du jeu radial, et
• d'un jeu radial compensation/roulement défini entre les zones intérieures de contact (16) de la surface radiale intérieure (14) de l'organe déformable de compensation (13) du jeu radial et des surfaces de butée de la bague extérieure (28),
et dans lequel le jeu radial effectif alésage (4)/roulement est inférieur à un jeu radial maximal permis entre l'alésage (4) et l'unité de roulement (3).

7. Assemblage roulant (1) selon l'une des revendications 5 et 6, dans lequel des parties de butée (23) comportent chacune
• une surface de butée extérieure (24) disposée en regard d'une zone de butée (27) de la surface radiale intérieure (14) de l'organe déformable de compensation (13) du jeu radial, et
• une surface de butée intérieure (25) disposée en regard d'une surface de butée de la bague extérieure (28), dans lequel la surface radiale extérieure (15) de l'organe déformable de compensation (13) du jeu radial présente des zones extérieures de contact (17) disposées en regard des zones de butée (27) de la surface radiale intérieure (14),
et dans lequel un jeu radial effectif alésage (4)/roulement est égal à la somme
• d'un jeu radial alésage (4)/compensation défini entre des surfaces de butée (26) de l'alésage (4) et des zones extérieures de contact (17) de l'organe déformable de compensation (13) du jeu radial,
• d'un jeu radial compensation/butée défini entre des zones de butée (27) de la surface radiale intérieure (14) de l'organe déformable de compensation (13) du jeu radial et des surfaces de butée extérieure de parties de butée (23), et
• d'un jeu radial butée/roulement défini entre des surfaces de butée intérieure (25) de parties de butée (23) et des surfaces de butée de la bague extérieure (28),
et dans lequel le jeu radial effectif alésage (4)/roulement est inférieur à un jeu radial maximal permis entre l'alésage (4) et l'unité de roulement (3).

8. Assemblage roulant (1) selon l'une des revendications 5 à 7, dans lequel l'élément rigide de butée (21) du jeu radial comporte deux tronçons circonférentiels (22), s'étendant chacun au moins sur une portion de la circonférence de la bague extérieure (6), se faisant face selon une direction axiale (A) de l'unité de roulement (3), et reliés entre eux par une pluralité de parties de butée (23) s'étendant chacune sensiblement selon la direction axiale (A) de l'unité de roulement (3).

9. Assemblage roulant (1) selon l'une des revendications 5 à 8, dans lequel l'élément rigide de butée (21) du jeu radial s'étend circonférentiellement autour de la bague extérieure (6) entre une première et une deuxième extrémité circonférentielles (21 a, 21 b) espacées l'une de l'autre,
de sorte que l'élément rigide de butée (21) du jeu radial s'étend sur une portion circonférentielle de la surface extérieure (9) de la bague extérieure (6) et est apte à se déformer circonférentiellement par déplacement relatif des extrémités circonférentielles.

10. Assemblage roulant (1) selon l'une des revendications 1 à 4, dans lequel
• l'élément rigide de butée (21) du jeu radial est un épaulement cylindrique (29) sortant de la bague extérieure (6) comportant une surface de butée d'épaulement (32) disposée en regard d'une surface de butée de l'alésage (26), et
• un espace radial épaulement/alésage (34) défini entre ladite surface de butée d'épaulement (32) et ladite surface de butée de l'alésage (26) présente un jeu radial inférieur à un jeu radial de l'espace radial roulement/alésage (10), notamment un jeu radial inférieur à un jeu radial maximal permis entre l'alésage (4) et l'unité de roulement (3).

11. Assemblage roulant (1) selon la revendication 10, dans lequel l'épaulement cylindrique (29) sortant de la bague extérieure (6) est accueilli dans un épaulement complémentaire (33) de l'alésage (4) présentant ladite surface de butée de l'alésage (26).

12. Assemblage roulant (1) selon l'une des revendications 1 à 4, dans lequel
• l'élément rigide de butée (21) du jeu radial est un épaulement cylindrique (29) sortant de l'alésage (4) comportant une surface de butée de l'alésage (26) disposée en regard d'une surface de butée de la bague extérieure (6), et
• un espace radial épaulement/roulement (35) défini entre ladite surface de butée de l'alésage (26) et ladite surface de butée de la bague extérieure (6) présente un jeu radial inférieur à un jeu radial de l'espace radial roulement/alésage (10), notamment un jeu radial inférieur à un jeu radial maximal permis entre l'alésage (4) et l'unité de roulement (3).

13. Assemblage roulant (1) selon la revendication 12, dans lequel l'épaulement cylindrique (29) sortant de l'alésage (4) est accueilli dans un épaulement complémentaire (33) de la bague extérieure (6) présentant ladite surface de butée de la bague extérieure (6).

14. Assemblage roulant (1) selon l'une des revendications 10 à 13, dans lequel la bague extérieure (6) de l'unité de roulement (3) s'étend axialement entre une première et une deuxième extrémité axiale (30, 31), et dans lequel l'épaulement cylindrique (29) est disposé à l'endroit de l'au moins une desdites extrémités axiales.

15. Assemblage roulant (1) selon l'une des revendications 1 à 4, dans lequel
• l'élément rigide de butée (21) du jeu radial est une bague cylindrique (36) montée sur la bague extérieure (6) et comportant une surface de butée de bague (37) disposée en regard d'une surface de butée de l'alésage (26), et
• un espace radial bague/alésage (38) défini entre ladite surface de butée de bague (37) et ladite surface de butée de l'alésage (26) présente un jeu radial inférieur à un jeu radial de l'espace radial roulement/alésage (10), notamment un jeu radial inférieur à un jeu radial maximal permis entre l'alésage (4) et l'unité de roulement (3).

16. Assemblage roulant (1) selon la revendication 15, dans lequel la bague extérieure (6) de l'unité de roulement (3) s'étend axialement entre une première et une deuxième extrémité axiale (30, 31) et dans lequel la bague cylindrique (36) est disposée à l'endroit de l'au moins une desdites extrémités axiales.
